# DEMANDE DE BREVET EUROPEEN

(11) **EP 2 824 520 A1**
(43) Date de publication de la demande: **14.01.2015**
(21) Numéro de dépôt: 13176153.8
(22) Date de dépôt: 11.07.2013
(51) Int. Cl.: G04D 7/00, G04B 23/00

(54) **Identification acoustique d'un mouvement mécanique d'une montre**

(71) Demandeur: Montres Breguet SA, 1344 L'Abbaye (CH)
(72) Inventeur: Favre, Jérôme, 1346 Les Bioux (CH); Sarchi, Davide, 1020 Renens (CH); Karapatis, Polychronis (Nakis), CH-1324 Premier (CH)
(74) Mandataire: Giraud, Eric

(57) **Abrégé**

On décrit l'identification d'une pièce d'horlogerie, qui comprend un mouvement mécanique (1). La pièce d'horlogerie comprend au moins un élément passif (2) fixé à une partie fixe (3) du mouvement mécanique. L'élément passif peut être une lame (2) ou une plaque fixée à une partie fixe d'un organe réglant (4) et configurée pour vibrer selon une ou plusieurs composantes de fréquence de vibration bien déterminées suite à la vibration du mouvement mécanique. Les composantes de fréquence de vibration de la lame ou plaque définissent une signature acoustique spécifique à la pièce d'horlogerie pour permettre une identification unique de la pièce d'horlogerie par une mesure de la signature acoustique au moyen d'un système de mesure acoustique.

## Description

L'invention concerne un dispositif pour le contrôle de l'authenticité d'une pièce d'horlogerie, telle qu'une montre avec un mouvement mécanique. Ce dispositif permet d'effectuer un contrôle d'identité de la montre en fonction d'une signature acoustique générée par la montre. Ceci permet de déterminer toute contrefaçon de ladite montre avec une reconnaissance de la montre en liaison à la signature acoustique générée par le mouvement mécanique.

Dans le cadre d'une pièce d'horlogerie, telle qu'une montre mécanique, une signature acoustique ou empreinte acoustique consiste à étudier les bruits générés par l'échappement. Pour réaliser ce type de mesure, il suffit de positionner la montre emboîtée sur un posage toujours identique et d'enregistrer le son émis au cours du temps par un microphone aérien ou de contact. Le signal temporel est ensuite analysé pour détecter l'occurrence des chocs et des frottements. Ces mesures sont réalisées pour contrôler les performances chronométriques du mouvement mécanique et identifier des défauts de fonctionnement. Il existe des appareils commerciaux, qui réalisent automatiquement ce type de mesure. Ils sont par exemple produits par l'entreprise Witschi Electronic AG.

A notre connaissance, de telles mesures n'ont jamais été adaptées et exploitées pour détecter toute contrefaçon de la pièce d'horlogerie. La raison est que l'analyse ne prend généralement pas en compte le contenu fréquentiel spécifique du bruit généré. De plus selon les différents systèmes de mesure des bruits générés par le mouvement mécanique d'une montre, il s'avère difficile d'extraire des comportements, qui se répètent, pour différents mouvements mécaniques de conception parfaitement identique. Il est à noter que le simple fait de déboîter et remboîter le même mouvement mécanique de la boîte de montre est susceptible de modifier certaines caractéristiques, tel que le niveau crête dû aux chocs. La position d'un microphone de contact ou aérien peut être également une source de fortes variations sur des indicateurs basiques de signature acoustique. Cela ne permet pas de différencier chaque montre testée de manière à précisément l'identifier, ni comme calibre spécifique, ni comme pièce spécifique.

L'invention a donc pour but de pallier aux inconvénients de l'état de la technique en fournissant un dispositif pour le contrôle de l'authenticité d'une pièce d'horlogerie à mouvement mécanique, qui permet de facilement détecter l'authenticité de ladite pièce d'horlogerie au moyen d'un système de mesure temporelle et fréquentielle des bruits générés par le mouvement mécanique. Ce dispositif indicateur passif n'affecte pas le fonctionnement du mouvement.

A cet effet, l'invention concerne un dispositif de contrôle de l'authenticité d'une pièce d'horlogerie, qui comprend les caractéristiques définies dans la revendication indépendante 1.

Des formes d'exécution du dispositif de contrôle sont définies dans les revendications dépendantes 2 à 22.

Un avantage du dispositif de contrôle réside dans le fait que, grâce à un élément passif fixé sur une partie du mouvement mécanique de la pièce d'horlogerie, il est facile de caractériser les paramètres vibratoires, qui sont notamment la fréquence et l'amortissement suite à la vibration générée dudit élément passif. Il est donc possible d'associer ces paramètres vibratoires spécifiques à une pièce d'horlogerie particulière au moment d'un contrôle final de ladite pièce d'horlogerie avant sa livraison. Ainsi l'élément passif à la vibration identifiable de la pièce d'horlogerie permet d'authentifier précisément ladite pièce d'horlogerie, afin d'éviter toute contrefaçon. Un faussaire devrait avoir un accès physique à chaque montre, ou à la base de données dans la fabrique pour pouvoir effectuer une contrefaçon, afin d'obtenir la corrélation entre le numéro de série de la pièce et sa signature acoustique. Cependant même en étant informé de cela, cela s'avère très difficile, voire impossible de réaliser un élément vibrant avec 3 à 4 modes, dont les fréquences sont connues à 4 chiffres significatifs.

Avantageusement avec un élément vibratoire spécifique à la pièce d'horlogerie, il est possible de mesurer plusieurs modes de vibration, qui sont bien séparés en fréquence. Il est donc simple de signer acoustiquement de manière unique et individuelle un très grand nombre de pièces d'horlogerie. Tout client peut vérifier l'authenticité de sa pièce d'horlogerie, telle que sa montre, en envoyant par exemple un enregistrement acoustique de sa pièce d'horlogerie à l'entreprise l'ayant fabriquée. Cet enregistrement acoustique permet d'analyser la signature acoustique, qui peut en valider la corrélation avec le numéro d'identification de la pièce horlogère. Des applications pour téléphones portables pourraient aussi être conçues et exploitées pour permettre le contrôle automatique du client par connexion au site internet de la fabrique.

Avantageusement l'élément passif vibrant est une lame ou lamelle ajoutée au mouvement mécanique, qui permet de définir une signature acoustique basée sur la fréquence de vibration de ladite lamelle. Cette lamelle peut être fixée par exemple sur le coq ou pont du balancier d'un organe réglant, qui peut être un échappement. La ou les lamelles sont disposées en des positions du mouvement mécanique de manière à ne pas influencer les performances de la pièce d'horlogerie.

Avantageusement il peut être fixé deux lamelles, chacune respectivement sur une structure fixe de deux tourbillons, que la pièce d'horlogerie peut comprendre. Chaque lamelle fixée à un tourbillon correspondant, peut définir une signature acoustique spécifique en fonction de l'analyse des fréquences de vibration par un système de mesure à microphone.

Les buts, avantages et caractéristiques du dispositif de contrôle de l'authenticité d'une pièce d'horlogerie apparaîtront mieux dans la description suivante notamment en regard des dessins sur lesquels :
la figure 1 représente une vue tridimensionnelle d'une forme d'exécution du mouvement mécanique avec le dispositif de contrôle de la pièce d'horlogerie selon l'invention,
les figures 2a et 2b représentent des graphiques temporels de signaux acoustiques (pression acoustique absolue), qui sont générés par le mouvement mécanique d'une part pour un échappement standard, et d'autre part pour un échappement, qui est équipé du dispositif de contrôle, tel qu'une lamelle vibratoire dédicacée selon l'invention, et
la figure 3 représente un graphique fréquentiel montrant l'effet du dispositif de contrôle selon l'invention sur la signature acoustique de la pièce d'horlogerie en comparaison aux bruits générés par le mouvement mécanique.

Dans la description suivante, toutes les parties du mouvement mécanique d'une pièce d'horlogerie, sur lequel est disposé le dispositif de contrôle, ne seront décrites que sommairement. La description suivante fait référence principalement au type de dispositif de contrôle, à sa forme et à son emplacement dans le mouvement mécanique.

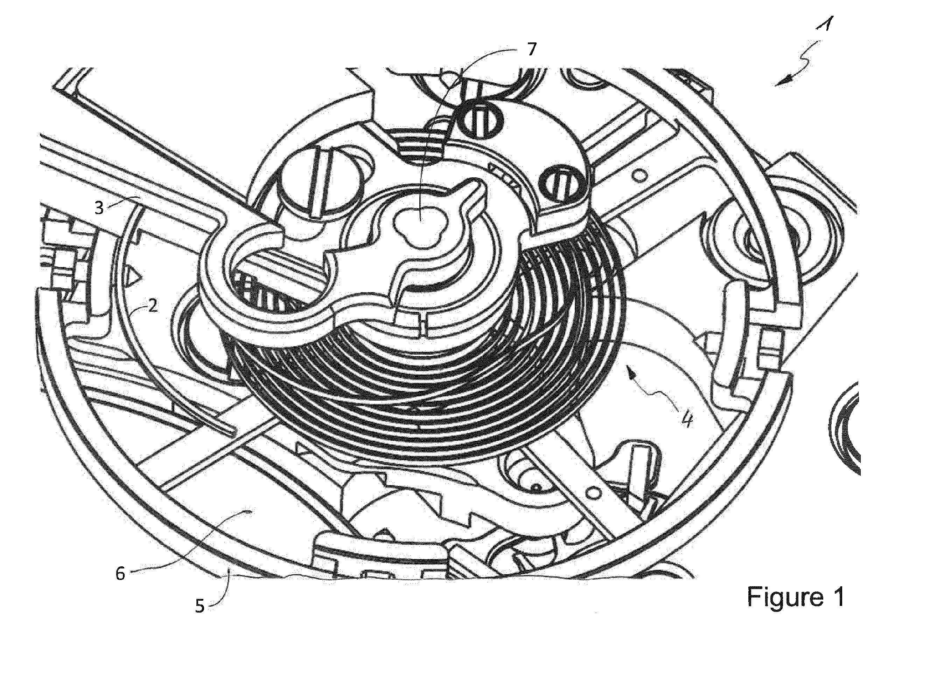

La figure 1 représente une vue tridimensionnelle partielle d'un mouvement mécanique 1 d'une pièce d'horlogerie, telle qu'une montre. Il est représenté principalement un organe réglant 4 du mouvement mécanique avec un balancier spiral 5 monté rotatif sur une platine 6. Cet organe réglant 4 peut être une partie d'un échappement. Le balancier spiral 5 tourne en alternance autour d'une tige axiale 7 maintenue libre de rotation entre la platine 6 et un coq ou pont de balancier 3.

Le dispositif de contrôle pour permettre d'authentifier une pièce d'horlogerie peut comprendre un élément passif 2 fixé à une partie fixe du mouvement mécanique de la pièce d'horlogerie. Cet élément passif est configuré de telle manière à vibrer selon une ou plusieurs composantes de fréquence de vibration bien déterminées suite aux chocs du mouvement mécanique. Comme ces composantes de fréquence sont dans une gamme de fréquences audibles entre 800 Hz et 20'000 Hz, et comme la fréquence fondamentale (la plus basse et la plus activée) est en dehors de l'intervalle de fréquences du bruit des chocs de mobiles d'échappement, il est possible de bien capter les bruits acoustiques générés par l'élément passif vibrant par un microphone de contact ou aérien d'un système de mesure susmentionné. La fréquence fondamentale peut se situer de préférence entre 800 Hz et 4'000 Hz. Ces composantes de fréquence de vibration de l'élément passif vibrant 2 sont susceptibles d'identifier précisément la pièce d'horlogerie, telle que la montre mécanique.

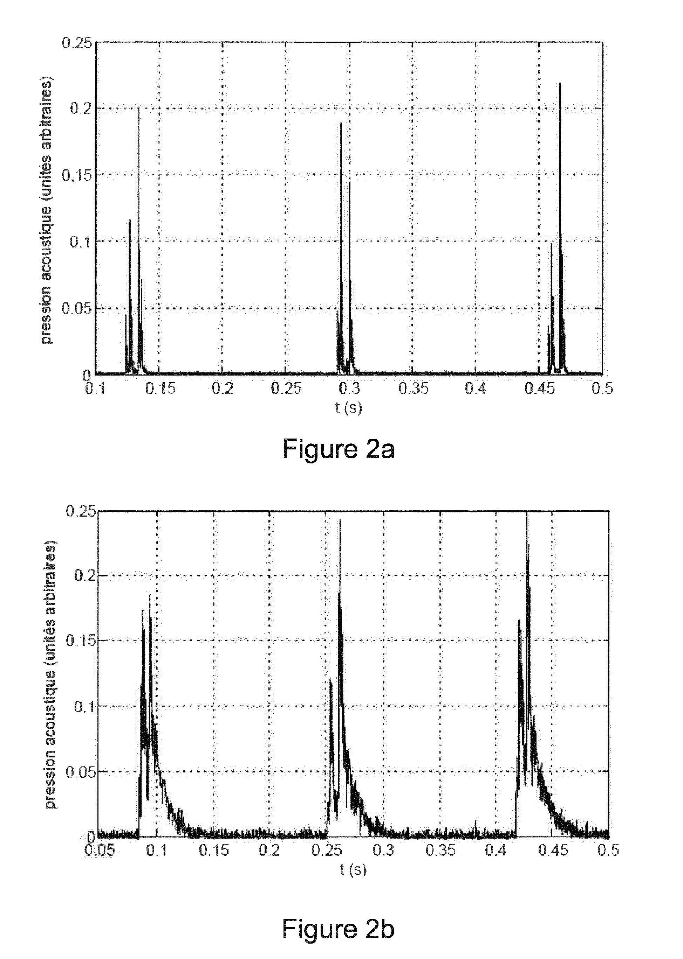

L'élément passif affecte principalement le contenu fréquentiel du signal, alors que son influence sur la forme temporelle est faible. Une comparaison est représentée aux figures 2a et 2b. La seule différence est qu'en présence d'un indicateur, le signal a un amortissement légèrement plus faible. La capacité de détection des chocs de mobiles d'échappement n'est donc pas affectée par la présence de l'indicateur, ce qui garantit de pouvoir mesurer la chronométrie de la montre en utilisant les appareils standard du commerce.

L'élément passif 2 peut être, par exemple, une lame ou lamelle, ou une plaque fixée à une partie de l'organe réglant 4 ou de l'organe de transmission ou entretien du mouvement mécanique. La lame ou lamelle peut avoir une section transversale rectangulaire ou elliptique. Par exemple, cette lame 2 est fixée à une de ses extrémités au coq ou pont de balancier 3, alors que l'autre extrémité de la lame est libre de mouvement. La lame peut être disposée au-dessus du balancier spiral 5 et parallèlement au plan défini par la roue du balancier spiral. En fonction de l'encombrement disponible, la lame peut aussi être disposée dans une direction orthogonale au plan du mouvement. La lame peut être droite ou configurée pour décrire une portion de cercle, qui peut être par exemple centrée sur l'axe de rotation 7 du balancier spiral 5.

Comme cette lame est fixée au coq ou pont du balancier, elle n'influence pas les performances du mouvement mécanique de la pièce d'horlogerie. La vibration de cette lame est ainsi indépendante de l'emboîtage du mouvement mécanique. Cette lame est bien configurée spécifiquement pour chaque pièce d'horlogerie à authentifier précisément par mesure des fréquences de vibration de cette lame.

Différentes formes de fixation de l'élément passif sous la forme d'une lame ou plaque peuvent être envisagées. Comme indiqué ci-devant, la lame peut être droite ou courbe avec un encastrement simple ou double ou à encastrement-appui au coq ou pont de balancier. Dans le cas d'un élément passif sous la forme d'une plaque ou plaquette, la plaque peut être rectangulaire ou quasi-rectangulaire avec un encastrement simple ou double ou triple ou complet avec les quatre côtés fixés au coq ou pont de balancier.

L'élément indicateur passif 2 peut être réalisé par exemple dans un matériau métallique, tel que de l'acier. Cet élément indicateur passif, sous forme de lame, peut être soudé ou brasé à une partie fixe du mouvement mécanique, par exemple au coq 3 ou pont du balancier spiral. Ses trois dimensions, telles que la largeur, l'épaisseur et la longueur, doivent en principe être comprises entre 0.1 mm et 5 mm, voire 10 mm. Selon une réalisation préférentielle, sa fréquence fondamentale doit être comprise entre 1 kHz et 4 kHz.

L'élément indicateur passif peut également venir de matière avec le coq 3 pour former une pièce monobloc, et prévoir des points d'usinage spécifiques par exemple des pointes, des creux, des micro-bras ou autres. Les parties usinées de l'élément indicateur passif peuvent être effectuées avant emboîtage pour définir son contenu fréquentiel de vibration spécifique, qui identifie la pièce d'horlogerie, afin d'éviter toute contrefaçon. Les fréquences de vibration de la lame configurée spécifiquement à la pièce d'horlogerie à authentifier, peuvent être bien connues et définies sur plusieurs chiffres significatifs par exemple 4 ou 5 chiffres.

Principalement, en coopération avec le balancier 5, l'organe réglant 4, qui comprend l'ancre et la roue non représentées, génère des vibrations lors de son fonctionnement. Ces vibrations sont transmises sur la platine et sur le coq ou pont de balancier 3, afin de faire vibrer ledit élément indicateur passif. Les bruits acoustiques, générés par les chocs entre le balancier et l'ancre, et l'ancre et la roue d'échappement, sont des bruits de tic et tac connus de tout mouvement mécanique d'une montre. Cet élément indicateur passif 2 peut avantageusement vibrer dans une gamme de fréquences audibles entre 100 Hz et 20 kHz. De plus, dans la configuration de l'élément passif 2 représentée à la figure 1, des tests ont montré, que la tenue aux chocs d'une telle construction est garantie jusqu'à 5'000 g.

Il est à noter que l'élément passif peut également être une plaque ou n'importe quel système passif pouvant vibrer, qui est intégré dans une boîte de montre. De préférence, cet élément passif est composé d'un métal ou d'un alliage d'au moins deux métaux ou également d'un métal amorphe ou verre métallique. L'élément passif métallique en vibration fournit une signature acoustique d'authentification de la pièce d'horlogerie susceptible d'être captée par un microphone de contact ou aérien d'un système de mesure. Chaque pièce d'horlogerie, notamment chaque mouvement mécanique d'une telle pièce d'horlogerie peut être identifiable de manière unique par la configuration de l'élément passif différent pour chaque mouvement mécanique réalisé.

Différents autres types de matériau peuvent être envisagés pour réaliser l'élément passif sous la forme par exemple d'une lame. Les matériaux utilisés doivent avoir une faible dépendance de la température et de préférence auto-compensés thermiquement. La variation du module de Young et de la densité doit compenser l'élongation-contraction géométrique, et être aussi résistante à l'oxydation naturelle. Toutefois, ces critères ne sont pas exclusifs. Il peut être choisi comme matériau, un métal précieux, de la céramique, du saphir, du quartz ou du silicium. Il peut aussi être utilisé deux matériaux pour permettre l'auto-compensation thermique, notamment en utilisant du silicium avec une couche d'oxyde de silicium ou deux métaux. L'utilisation d'un ou plusieurs matériaux magnétostrictifs aurait l'avantage additionnel de permettre le simple diagnostic d'aimantation d'un mouvement déréglé. L'élément passif peut aussi être réalisé dans un ou plusieurs matériaux paramagnétiques avec une perméabilité magnétique inférieure à 1.01.

A titre illustratif, il est possible de remarquer la différence de bruits acoustiques générés par le mouvement mécanique pour un échappement standard sans dispositif de contrôle à la figure 2a, et pour un échappement muni du dispositif de contrôle, tel qu'une lame passive mise en vibration par les bruits générés par le mouvement mécanique à la figure 2b. Le contenu fréquentiel, c'est-à-dire un des paramètres de la signature acoustique, peut être analysé par un système de mesure à microphone de contact ou aérien. Grâce au dispositif de contrôle de la présente invention, il est possible d'avoir des comportements indépendants des conditions de mesure, dont l'émergence et le rapport signal/bruit sont élevés, pour des mouvements de conception identique. Ceci n'était pas le cas pour des mouvements mécaniques de l'état de la technique.

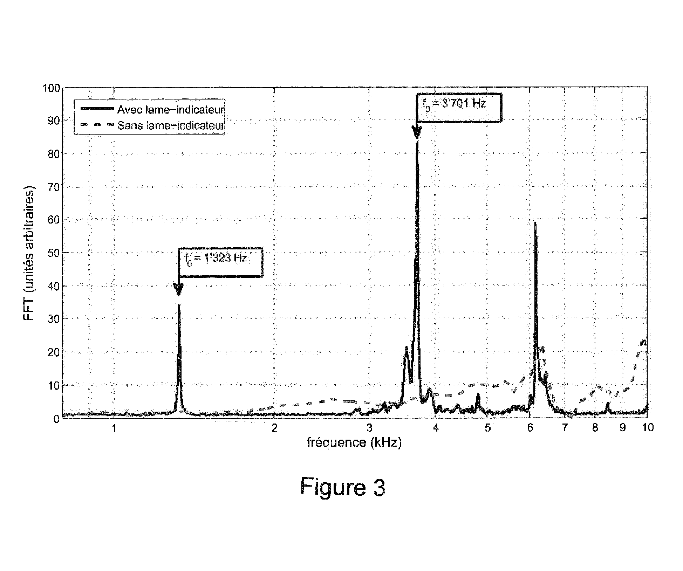

A titre d'exemple non limitatif avec une lame spécifiquement configurée et fixée à une partie fixe du mouvement mécanique, la figure 3 représente un graphique fréquentiel des bruits acoustiques générés lors du fonctionnement du mouvement mécanique. Il est possible de constater l'effet du dispositif de contrôle selon l'invention sur la signature acoustique de la pièce d'horlogerie en comparaison aux bruits traditionnels générés par le mouvement mécanique. Avec une lame passive fixée à la partie fixe du mouvement mécanique, on peut observer un premier mode de vibration de la lame par exemple à 1'323 Hz, le second mode de vibration à 3'534 Hz, le troisième mode de vibration à 3'701 Hz et le quatrième mode de vibration à 6'171 Hz. Ces bruits acoustiques générés principalement par la lame passive en vibration peuvent être mesurés précisément par un système de mesure de manière à authentifier précisément la pièce d'horlogerie.

A partir de la description qui vient d'être faite, plusieurs variantes du dispositif de contrôle de l'authenticité d'une pièce d'horlogerie peuvent être conçues par l'homme du métier sans sortir du cadre de l'invention définie par les revendications. Dans le cas d'une pièce d'horlogerie à double tourbillon, c'est-à-dire avec deux échappements, il est possible de fixer à une partie fixe de chaque échappement une lame passive configurée spécifiquement pour chaque échappement. Les modes propres de vibration de chaque lame passive des deux tourbillons peuvent être différents pour augmenter la précision d'authentification de la pièce d'horlogerie. Il aurait pu être imaginé d'intégrer dans tout appareil mécanique ou électronique, un tel dispositif de contrôle mis en vibration par des composants de l'appareil, afin d'assurer une authentification de l'appareil le comprenant.

## Revendications

1. Dispositif de contrôle de l'authenticité d'une pièce d'horlogerie, qui comprend un mouvement mécanique (1), **caractérisé en ce que** le dispositif comprend au moins un élément passif (2) fixé à une partie fixe (3) du mouvement mécanique, ledit élément passif étant configuré de telle manière à vibrer selon une ou plusieurs composantes de fréquence de vibration bien déterminées suite à la vibration du mouvement mécanique induite par des chocs de mobiles d'échappement pour définir une signature acoustique spécifique à la pièce d'horlogerie et pour permettre de déterminer l'authenticité de la pièce d'horlogerie par une mesure de la signature acoustique au moyen d'un microphone d'un système de mesure acoustique.

2. Dispositif de contrôle selon la revendication 1, **caractérisé en ce que** l'élément passif est une lame ou lamelle (2) ou une plaque.

3. Dispositif de contrôle selon la revendication 1, **caractérisé en ce que** l'élément passif est une lame ou lamelle (2) ayant une section transversale rectangulaire.

4. Dispositif de contrôle selon la revendication 1, **caractérisé en ce que** l'élément passif est une lame ou lamelle (2) ayant une section transversale elliptique.

5. Dispositif de contrôle selon la revendication 1, **caractérisé en ce que** l'élément passif est une lame ou lamelle (2) droite, dont une des extrémités est fixée à la partie fixe (3) du mouvement mécanique et une autre extrémité est libre de mouvement.

6. Dispositif de contrôle selon la revendication 1, **caractérisé en ce que** l'élément passif est une lame ou lamelle (2) droite, dont les deux extrémités sont fixées à la partie fixe (3) du mouvement mécanique.

7. Dispositif de contrôle selon la revendication 1, **caractérisé en ce que** l'élément passif est une lame ou lamelle (2) courbe, dont une des extrémités est fixée à la partie fixe (3) du mouvement mécanique et une autre extrémité est libre de mouvement.

8. Dispositif de contrôle selon la revendication 1, **caractérisé en ce que** l'élément passif est une lame ou lamelle (2) courbe, dont les deux extrémités sont fixées à la partie fixe (3) du mouvement mécanique.

9. Dispositif de contrôle selon la revendication 1, **caractérisé en ce que** l'élément passif (2) est fixé sur une partie fixe (3) d'un organe réglant (4) du mouvement mécanique.

10. Dispositif de contrôle selon la revendication 9, **caractérisé en ce que** l'élément passif (2) est fixé sur un coq ou pont de balancier (3), qui constitue la partie fixe du mouvement mécanique.

11. Dispositif de contrôle selon la revendication 10, **caractérisé en ce que** l'élément passif (2) est réalisé dans un matériau métallique et est soudé ou brasé sur le coq ou pont de balancier (3).

12. Dispositif de contrôle selon la revendication 10, **caractérisé en ce que** l'élément passif (2) est réalisé dans un matériau métallique, et **en ce que** l'élément passif (2) vient de matière avec le coq ou pont de balancier (3) et est usiné pour définir une ou plusieurs fréquences de vibration bien déterminées.

13. Dispositif de contrôle selon la revendication 9, **caractérisé en ce que** l'élément passif (2) est une lame ou lamelle disposée parallèlement à un plan défini par une roue (5) d'un balancier spiral de l'organe réglant.

14. Dispositif de contrôle selon la revendication 13, **caractérisé en ce que** la lame ou lamelle définit une portion de cercle centrée par rapport à un axe de rotation (7) du balancier spiral (5).

15. Dispositif de contrôle selon la revendication 1, **caractérisé en ce que** l'élément passif (2) est composé d'un métal ou d'un alliage d'au moins deux métaux ou d'un métal amorphe ou verre métallique.

16. Dispositif de contrôle selon la revendication 15, **caractérisé en ce que** l'élément passif (2) est réalisé en acier.

17. Dispositif de contrôle selon la revendication 15, **caractérisé en ce que** l'élément passif (2) est réalisé en métal précieux.

18. Dispositif de contrôle selon la revendication 1, **caractérisé en ce qu'il** comprend deux éléments passifs, un premier élément passif étant fixé à une partie fixe d'un premier organe réglant du mouvement mécanique, et un second élément passif étant fixé à une partie fixe d'un second organe réglant du mouvement mécanique.

19. Dispositif de contrôle selon la revendication 18, **caractérisé en ce que** les premier et second éléments passifs sont configurés différemment l'un de l'autre avec des composantes différentes de fréquence de vibration pour définir une signature acoustique spécifique de la pièce d'horlogerie.

20. Dispositif de contrôle selon la revendication 1 **caractérisé en ce que** l'élément passif (2) est réalisé en céramique.

21. Dispositif de contrôle selon la revendication 1, **caractérisé en ce que** l'élément passif (2) est réalisé dans un ou plusieurs matériaux paramagnétiques avec perméabilité magnétique inférieure à 1.01.

22. Dispositif de contrôle selon la revendication 1, **caractérisé en ce que** l'élément passif (2) est réalisé dans un ou plusieurs matériaux magnétostrictifs.
